# EUROPEAN PATENT APPLICATION

(11) **EP 1 424 375 A1**
(43) Date of publication of application: **02.06.2004**
(21) Application number: 02708651.1
(22) Date of filing: 25.03.2002
(51) Int. Cl.: C09D 167/00, C09D 7/12, B32B 27/36

(54) **RESIN COMPOSITION FOR PAINT**

(30) Priority: 27.03.2001 JP 2001089624
(71) Applicant: Sumitomo Chemical Company, Limited, Osaka-shi Osaka 541-8550 (JP)
(72) Inventor: FUJITA, Mahito, Sakai-shi, Osaka 590-0143 (JP); NAITOH, Shigeki, Suita-shi, Osaka 565-0824 (JP)
(74) Representative: Cresswell, Thomas Anthony
(86) International application number: PCT/JP2002/002820
(87) International publication number: WO 2002/077113

(57) **Abstract**

The present invention provides a resin composition for paint, which contains a thermo-decomposition type foaming agent and polyester resin for paint, a laminate obtainable by applying said composition to a substrate, an article containing said laminate, and a method for recovering a substrate from a laminate comprising heating said laminate. And the paint in the laminate obtainable from said resin composition and the substrate is adhered firmly to the substrate until recycled and the paint layer can easily be peeled off from the substrate by heating the laminate. The resulting substrate can be reused.

## Description

### TECHNICAL FIELD

The present invention relates to a resin composition for paint which contains thermo-decomposition type foaming agent and polyester resin for paint, to a laminate comprising said resin composition and a substrate, to an article containing the laminate, and to a method for recovering a substrate from a laminate.

### BACKGROUND ART

A laminate obtained by coating a substrate such as a steel plate with paint for protecting the substrate from rust, cracks, etc. is used for many articles such as, for example, cars, home electric appliances and electronic products. Recently, for the purpose of recycling (reusing) substrates, it is required to decompose the paint layer of the laminate to recover the substrate. Forexample, JP-A-8-271138 proposes a resin composition for paint which contains paint and a thermally expandable foaming agent (microballoon) and discloses that when a laminate obtained by applying the composition to a substrate is heated, the paint layer foams and decomposes and the substrate is recovered.

However, according to the present inventors' study on a resin composition for paint containing the thermally expandable foaming agent, it has been found out that if a solvent for paint such as ethyl acetate is used for the composition, shells of the thermally expandable foaming agent dissolves to invite the spill of internal gas and it, therefore, is impossible to decompose the paint layer when recovering a substrate.

Moreover, according to their further study on a resin composition for paint containing no solvent, it has been found out that when the composition is baked after its application to a substrate, a part of the thermally expandable foaming agent foams and, also in this case, it is impossible to decompose the paint layer when recovering the substrate.

A first object of the present invention is to provide a resin composition for paint, the composition being capable of forming a paint layer the decomposition of which for recovery of a substrate will take place sufficiently even if a solvent is used or the paint layer is heated to cure after its application and the composition being capable of achieving a bonding force between the paint layer and the substrate strong enough.

A second object of the present invention is to provide a laminate which is obtained by applying the resin composition for paint to a substrate wherein the substrate can be recovered easily.

A third object of the present invention is to provide an article including the laminate.

A fourth object of the present invention is to provide a method for recovering the substrate from the laminate by heating the laminate.

Under such circumstances, the present inventors studied resin compositions for paint which comprises a resin for paint and a foaming agent. As a result, they found out that a resin composition containing a specific resin and a specific foaming agent can solve such problems and, even if an adhesive is applied to a paint layer of a laminate obtained, the paint layer foams and decomposes so that the substrate can be peeled off easily. Thus, the present invention is completed.

### DISCLOSURE OF THE INVENTION

That is, the present invention provides a resin composition for paint, which contains a thermo-decomposition type foaming agent and polyester resin for paint.

The present invention also provides a laminate obtainable by applying said composition to a substrate.

The present invention further provides an article containing said laminate.

The present invention further provides a method for recovering a substrate from a laminate comprising heating said laminate.

### BRIEF DESCRIPTION OF THE DRAWINGS

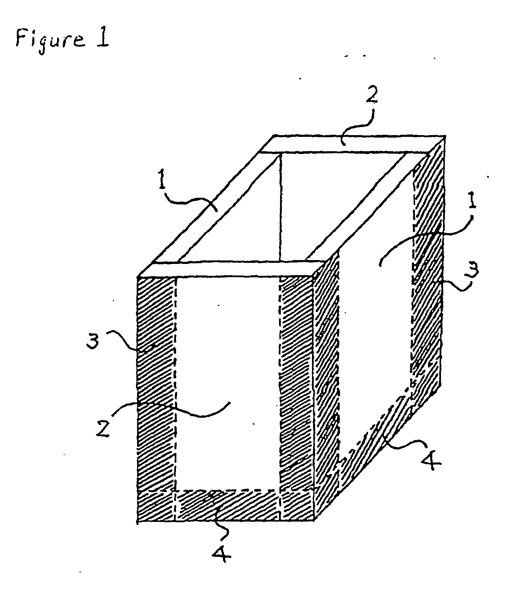

Fig. 1 is a perspective view showing a rectangular box before pouring a foamed hard urethane thereinto, the box being made of two laminates and three polyethylenes (two sides and one bottom) in Example 1.

### EXPLANATION OF SYMBOLS

1. denotes a laminate (a paint layer is disposed only inside).
2. denote a polyethylene plate.
3. denotes a tape (for securing the sides).
4. denotes a tape (for securing the bottom).

### BEST MODE FOR CARRYING OUT THE INVENTION

The present invention is described in detail below.

The resin contained in the resin composition for paint of the present invention is polyester resin used for paint and examples thereof include condensation-polymerization products of multifunctional carboxylic acids, such as maleic acid, maleic anhydride, fumaric acid, phthalic acid, phthalic anhydride, isophthalic acid, terephthalic acid, adipic acid and sebacic acid, andpolyhydricalcohols, suchasethyleneglycol, propylene glycol, diethylene glycol, glycerol and pentaerythritol. Here, the multifunctional carboxylic acids include, for example, salts of multifunctional carboxylic acids such as sodium, potassium, calcium and magnesium, esters of multifunctional acids, chlorides of multifunctional acids and anhydrides of multifunctional acids as well as multifunctional carboxylic acids.

Specific examples of the polyester resin for paint include alkyd resins obtainable by condensation-polymerization of dicarboxylic acids, which include unsaturated dicarboxylic acids, with polyhydric alcohols and more specifically include unsaturated polyester resins obtainable by condensation-polymerization of saturated dicarboxylic acids, unsaturated dicarboxylic acid or the like with glycol or the like. Here, the alkyd resins include, for example, phthalic acid resins such as drying fatty acid-modified phthalic acid resins obtainable by subjecting phthalic anhydride or the like and glycerol or the like together with fatty acids of drying or semidrying oil such as tung oil, dehydrated castor oil, linseed oil and soybean oil to condensation-polymerization; nondrying fatty acid-modified phthalic acid resins obtainable by subjecting phthalic anhydride or the like and glycerol or the like together with fatty acid or the like such as nondrying or semidrying oil such as castor oil, coconut oil, cotton seed oil and soybean oil to condensation-polymerization; fatty acid-modified phthalic acid resins obtainable by subjecting phthalic anhydride or the like and glycerol or the like together with resin acid such as rosin and copal to condensation-polymerization; and phenol resin-modified phthalic acids obtainable by subjecting drying phthalic acid together with phenol resin or the like to condensation-polymerization.

As the polyester resin for paint, two or more kinds of polyester resins for paint may be used.

Moreover, as the polyester resin for paint used for the present invention, commercially available polyester resins for paint may be used. In particular, polyester resins for paint used for precoating steel plates (PCM) are suitable. Specific examples of the polyester resins for paint used for PCM include "FinetoughC IPT236 RE559" (trade name: manufactured by Dainippon Ink & Chemicals, Inc. ) , "KPT-153 SE172" (trade name: manufactured by Kansai Paint Co., Ltd.), "KP426" (trade name: manufactured by Kansai Paint Co., Ltd.), and "Superluck DIF R-63IK" (trade name: manufactured by Nippon Paint Co., Ltd.)

The thermo-decomposition type foaming agent used for the present invention is a substance which usually causes chemical decomposition on heating to generate gas. Examples thereof include inorganic foaming agents including inorganic salt compounds such as sodium bicarbonate, ammonium carbonate, ammonium bicarbonate, ammonium nitrite and ammonium phosphate, light metals such as magnesium powder and aluminum powder, hydrides such as sodium borohydride and sodium hydride, and azides such as sodium azide; and organic foaming agents including carbonizing materials such as starch, cellulose, saccharides and dipentaerythritol, azo compounds such as azodicarbonamide and azobisisobutyronitrile, nitroso compounds such as dinitrosopentamethylenetetramine and N,N'-dinitroso-N,N'-dimethylterephthalamide, hydrazide compounds such as p-toluenesulfonyl hydrazide, p,p'-oxybis(benzenesulfonyl hydrazide) and hydrasol carbonamide, p-toluenesulfonyl azide, acetone-p-sulfonyl hydrazone, melamine, urea and dicyanamide.

As the thermo-decomposition type foaming agent, two or more thermo-decomposition type foaming agents may be used.

Among the thermo-decomposition type foaming agents, organic foaming agents are preferred. In particular, p,p'-oxybis(benzenesulfonyl hydrazide) and azodicarbonamide are suitable.

With respect to the content of the thermo-decomposition type foaming agent in the resin composition for paint of the present invention, the content of the thermo-decomposition type foaming agent is usually about 5-100 parts by weight, preferably 10-50 parts by weight per 100 parts by weight of the polyester resin for paint (solid content).

The resin composition for paint of the present invention may contain, for example, melamine resin, curing agent such as block isocyanate and triglycidyl isocyanate, pigment, dye, thickener, lubricant, antifoaming agent, dispersing agent, filler, rust inhibitor, flame retardant, brightener, coupling agent, polymerization inhibitor, adhesion producer, surface regulator, ultraviolet light absorbent, antioxidant and antistatic agent, if necessary.

In addition, the resin composition for paint of the present invention may contain, as a solvent, organic solvents such as hydrocarbons, e.g. toluene, xylene and petroleum ether; esters, e.g. ethyl acetate and butyl acetate; ketones, e.g. acetone and methyl ethyl ketone; glycols, e.g. polyethylene glycol and polypropylene glycol; and ethers, e.g. diethyl ether and tetrahydrofuran, water, etc.

When using water as a solvent, it is preferable to further contain protective colloids or surfactants such as partially saponified polyvinyl alcohol in the resin composition for the purpose of dispersing the polyester resin for paint.

The content of the solvent in the resin composition for paint of the present invention is usually about 0-1000 parts by weight, preferably 10-100 parts by weight per 100 parts by weight of the solid components of the polyester resin for paint.

The resin composition for paint of the present invention has a viscosity such that it can be applied to a substrate. To describe by reference to the case of applying at room temperature by spray coating, the viscosity of the resin composition for paint at 25°C is usually about 5-500 mPa·s, and preferably about 20-100 mPa·s. If the composition has a high visicosity, the viscosity may be adjusted using a solvent or the like.

The resin composition for paint of the present invention may contain, for example, room temperature curing resin such as urea, cyanoacrylate and urethane, thermosetting resin such as phenol and epoxy, photo-curing resin such as urethane-acrylate, epoxy-acrylate, crosslinked polymers such as foamed hard urethane unless the desired performance is deteriorated.

The laminate of the present invention can be obtained by applying a resin composition for paint obtainable in such a way above to a substrate and baking the resulting paint layer.

The substrate used in the present invention may be, for example, a material which can adhere to the resin composition for paint of the present invention, examples of which specifically include inorganic substances such as metal, e.g. gold, silver, copper, iron, tin, lead, aluminum and silicon, glass and ceramics; polymer materials such as cellulose-type polymermaterials, e.g. paper and cloth, melamine resins, acrylic urethane resins, urethane resins, (meth)acrylic resins, styrene-acrylonitrile copolymers, polycarbonate resins, phenol resin, alkyd resin, epoxy resin and silicone resin.

As a material of the substrate, two or more kinds of materials may be mixed and compounded. In addition, when the laminate is that in which two different substrates are adhered through a paint layer of the present invention, the materials constituting the two substrates may be the same material or different materials.

The substrate is not particularly limited in characteristic and shape and may be, for example, in a film shape, a sheet shape, a plate shape and a fiber shape.

In addition, the substrate preferably has a heat resistance temperature higher than the heating temperature employed when the substrate is peeled and recovered because the interface between the substrate and the paint layer comes to cause peeling easily.

Moreover, to the substrate may be applied a coating film of mold release agent, plating or the like, a paint film using paint comprising a resin composition other than the present invention, surface modification by means of plasma, laser or the like, surface oxidation, and surface treatment such as etching, if necessary.

The method for applying a resin composition for paint used in the production of a laminate includes, for example, brush coating, pad coating, blast coating, spray coating, electrostatic coating, roller coating, curtain flow coating, flow coating, dip coating, electrodeposition coating, powder coating, roll coater coating, blade coater coating, screen coating, and a method using a spin coater.

The thickness of the paint layer obtained by baking the resin composition for paint of the present invention is usually about 2-200 µm and preferably about 3-30 µm. When the thickness is less than 2 µm, the layer tends to become hard to peel off. The case where the thickness is 200 µm or more is desirable because characteristics desired as paint, such as bending characteristics, tend to be improved.

As conditions where the resin composition for paint is baked, usually chosen is a temperature at which the thermo-decomposition type foaming agent contained in the composition does not foam and the resin fully forms a coat film and which is lower than the heat resistance temperature of the substrate. As a specific example, the baking conditions employed in the case where a resin composition for paint containing p,p'-oxybis(benzenesulfonyl hydrazide), the decomposing and foaming temperature of which is 155°C, as a thermolysis type foaming agent is used and a steel plate is used as a substrate are exemplified by a heating temperature of about 100-150°C and a baking time of about 1-30 minutes.

In addition, the baking conditions employed in the case where a resin composition for paint containing azobiscarbonamide, the decomposing and foaming temperature of which is 205°C, as a thermo-decomposition type foaming agent is used and an aluminum alloy plate is used as a substrate are exemplified by a heating temperature of about 100-190°C, preferably about 120-180°C, and a baking time of about 1-30 minutes.

The laminate thus obtained can be used in articles having a substrate the recycle of which is required, such as household electric appliances, e.g. refrigerators, washing machines, air conditioners, microwave ovens, vacuum cleaners and televisions, office supplies, e.g. personal computers, printers, copying machines and telephones, items for life, e.g. cars, furniture and housing structural materials, back cooling panels for liquid crystal panels and plasma display panels (PDP), electronics products, e.g. such as semiconductors, printed wiring boards and integrated circuits.

In addition, a product which is obtained by disposing in layer, on a paint layer of a laminate of the present invention, an adhesive layer other than the paint layer, such as a double coated tape and an adhesive, followed by adhering a different substrate to a surface of the adhesive layer is also an article of the present invention. When the article is heated, the paint layer decomposes and foams and at least the substrate in contact with the paint layer is recovered easily.

Particularly suitable examples of the articles of the present invention are refrigerators and back cooling panels for PDP.

When the laminate of the present invention is heated during the recovery of the substrate, the paint layer foams and decomposes to peel off from the substrate and the substrate and the paint layer separate easily from each other. Thus, the substrate can be recovered.

Examples of the method of heating the laminate include a method of heating the laminate while placing it in a convection oven, etc.; a method of heating the laminate by applying direct fire, infrared rays, etc.; a method of blowing hot air, steam, etc. on the laminate; a method of soaking the laminate in hot water or oil of high temperature; a method of heating with a heating body such as an iron plate and a heating roll; and a method of dielectric heating by high-frequency waves.

The conditions of heating a laminate during the recovery of a substrate are preferably set as being a temperature not lower than that sufficient for the thermo-decomposition type foaming agent contained in a paint layer to decompose and foam. When setting the conditions as being not lower than the decomposition and foaming temperature of the thermo-decomposition type foaming agent, it is possible to recover the substrate in shorter time. However, even when heating at a temperature lower than the decomposing and foaming temperature of a thermo-decomposition type foaming agent with consideration to the heat resistance of the substrate or the like, it is possible to cause decomposition and foaming by heating for a relatively longer time.

When the article is an insulating housing, like a refrigerator, in which one side of the substrate is formed of an insulationmaterial, the heating temperature is set relatively higher and/or the heating time is set relatively longer because the insulation material side is poor in thermal conductivity. As a specific example, when a substrate is recovered from a laminate in an insulating housing which uses laminates obtainable from a resin composition for paint containing p,p'-oxybis(benzenesulfonyl hydrazide), the decomposing and foaming temperature of which is 155°C, as a thermo-decomposition type foaming agent and a steel plate as a substrate and which is obtained by bonding the laminates with a foamed hard urethane, the heating temperature is, for example, about 100-200°C, preferably about 150-190°C and the heating time is, for example, about 1-30 minutes.

When a substrate is recovered from a laminate in a cooling panel which uses laminates obtainable from a resin composition for paint containing azodicarbonamide, the decomposing and foaming temperature of which is 205°C, as a thermo-decomposition type foaming agent and an aluminum alloy plate as a substrate and which is obtained by bonding the laminates and a glass plate with a pressure sensitive adhesive tape, the heating temperature is, for example, about 180-260°C, preferably about 200-250°C and the heating time is, for example, about 1-30 minutes.

Examples of the method of reusing the substrate recovered from a laminate include a method of using the substrate as received; when the substrate is metal, thermoplastic plastic, etc., a method of reusing the substrate after its melt forming; and when the substrate is metal, a method of reusing it directly after washing its coat surface having thereon a paint, with a solvent.

Specifically, a detailed explanation is made for an article which is an insulating housing, like a refrigerator, comprising an outer box made of a precoat steel plate and an ABS resin plate. The outer box and an inner box-are, respectively, coated with a resin composition for paint of the present invention and is baked to form laminates and then they are subjected to fabrication. The outer box and the inner box are bonded through a foamed hard urethane to form the insulating housing. When a need for recycling the substrates, namely the outer box and the inner box, from the insulating housing arises, the outer box, the foamed hard urethane and the inner box are separated and recovered easily by heating and the paint layers of the outer and inner boxes aredecomposed. The outer box recoveredmaybe reused as received as a substrate or, alternatively, may be reused as metal scrap. The foamed hard urethane and the ABS resin plate of the inner box also can be reused after necessary processing.

Moreover, in the case of a panel for PDP comprising a glass panel for a plasma display panel (PDP) and an aluminum alloy plate for heat release which forms the backmost face, the aluminum alloy plate, which is a cooling plate, is coated with a resin composition for paint of the present invention and is baked to form a laminate. Then, the paint layer of the aluminum alloy plate and a glass panel are bonded through a pressure sensitive adhesive tape to complete a panel for PDP. When a need for recovering the glass panel for PDP and the aluminum alloy plate arises, the paint layer is foamed and decomposed by heating and the glass panel and the aluminum alloy plate can be recovered easily. The aluminum alloy plate may be used as a substrate again by being washed with a solvent or, may be reused directly as metal scrap. The glass panel can be peeled off because it is a double-coated tape.

The present invention will be described in more detail below by referring to Examples, but the invention is not limited by them. In the Examples, part (s) and % mean weight basis unless stated otherwise. In addition, the solid content indicates the weight ratio of the ingredient(s) except the solvent.

### <Substrate: A>

The following specimens were used as a substrate.
A-1 : Dull steel plate (JIS G 3141) 25 mm x 100 mm, thickness 0.8 mm
A-2: Colored galvanized plate (YODOCOLOR white) 25 mm x 100 mm, thickness 0.5mm
A-3: Aluminum alloy plate (A5052P) 210 mm x 297 mm, thickness 2.0 mm
A-4: Glass plate 76 mm x 52 mm, thickness 1.3 mm ("MATSUNAMI MICRO SLIDE GLASS" manufactured by Matsunami Glass Ind., Ltd.)

### <Polyester resin for paint: B>

B-1: "FineTough C IPT236 RE559" (polyester resin for paint, manufactured by Dainippon Ink & Chemicals, Inc., solid content 60%)
B-2: "KPT-153 SE172" (polyester resin for paint, manufactured by Kansai Paint Co., Ltd.)
B-3: "KP426" (polyester resin for paint, manufactured by Kansai Paint Co., Ltd.)
B-4: "Superluck DIF R-63 IK" (polyester resin for paint, manufactured by Nippon Paint Co., Ltd.)

### <Foaming agent: C>

C-1: p,p' -Oxybis (benzenesulfonyl hydrazide) "Cellmic S" (thermo-decomposition type foaming agent, manufactured by Sankyo Kasei Co.)
C-2: "Microsphere F-30D" (thermal expansion type foaming agent, manufactured by Matsumoto Yushi-Seiyaku Co., Ltd.)
C-3: Azodicarbonamide "Cellmic C-121" (thermo-decomposition type foaming agent, manufactured by Sankyo Kasei Co.)

### <Example 1>

First, a resin composition for paint was prepared by mixing 100 parts of polyester resin for paint (B-1) and 50 parts of thermo-decomposition type foaming agent (C-1). Foaming was not detected even though 150 parts of the resin composition for paint was dissolved in 25 parts of ethyl acetate.

Next, a laminate was prepared by applying the resin composition for paint containing no ethyl acetate to one side of substrate (A-1) by spray coating so that the paint layer might have a thickness of about 30 µm and then baking at 120°C for 5 minutes. In the same way, one more laminate of (A-1) / (resin composition for paint) was prepared. Subsequently, as shown in Fig. 1, paired laminates (1) were arranged in parallel so that their surfaces of their paint layers might be located inside and paired polyethylene plates (2) having a size of 40mm x 100 mm and a thickness of 2mm were fixed with tapes (3) from the outside, forming a rectangular pole box having a size of 25 mm x 40 mm and a height of 100 mm comprising the opposite laminates (1) and opposite polyethylene plates (2). One of the bottoms of the box was closed with a polyethylene plate of 25 mm x 40 mm, which was fixed with tapes (4) from the outside.

Next, the box was placed with its open facing up and foamed hard urethane before curing was poured into the box. The foamed hard urethane before curing used here was a product obtained by adding 4.507 parts of isocyanate (manufactured by Takeda Chemical, Ltd.) to a mixture prepared in advance by mixing 3.75 parts of premixed polyol (R) (manufactured by Takeda Chemical, Ltd.) and 0.53 parts of cyclopentane, and then mixing and stirring.

After pouring the urethane into the box and leaving it to stand at 25°C for 12 hours, the three polyethylene plates including the two side surfaces and the bottom surface were removed. Thus, an article comprising the laminates bonded through the foamed hard urethane was completed.

The article was subjected to heat treatment for 5 minutes in a 160°C convection oven. When the article was cooled and removed from the oven, the baked resin composition for paint had already caused cohesive failure and the steel plate and the foamed hard urethane had been separated.

### <Examples 2-5, Comparative Examples 1 and 2>

Articles were prepared in the same manner as Example 1 except using the combinations shown in Table 1 as a substrate and a resin composition for paint and the recovery of the substrates were attempted by heating in the same manner as Example 1. The results are summarized in Table 1 together with Example 1.

**Table 1**

| | | | Example 1 | Example 2 | Example 3 | Example 4 | Example 5 | Comparative Example 1 | Comparative Example 2 |
|---|---|---|---|---|---|---|---|---|---|
| Laminate | Substrate | | A-1 | A-2 | A-2 | A-2 | A-2 | A-1 | A-1 |
| | Resin composition for paint | Resin | B-1 | B-1 | B-2 | B-3 | B-4 | B-1 | None |
| | | Foaming agent | C-1 | C-1 | C-1 | C-1 | C-1 | None | None |
| Substrate after heating¹⁾ | | | ○ | ○ | ○ | ○ | ○ | × | × |

| | | | | | | | | | |
|---|---|---|---|---|---|---|---|---|---|
| 1) Substrate after heating ○ : A substrate and a foamed hard urethane were separated from each other and the substrate was recovered successfully. ×: A substrate and a foamed hard urethane were not separated from each other and the substrate failed to be recovered. | | | | | | | | | |

### <Comparative Example 3>

When 50 parts of thermally expandable foaming agent (C-2) was mixed with a mixture of 100 parts of polyester resin for paint (B-1) and 25 parts of toluene, (C-2) dissolved in ethyl acetate to cause degassing.

### <Comparative Example 4>

Preparation of a laminate was conducted in the same manner as Example 1 except using 50 parts of thermally expandable foaming agent (C-2) as a foaming agent. However, (C-2) foamed at the time of baking and no laminate was obtained.

### <Example 6>

A resin composition for paint was prepared by mixing 100 parts of polyester resin for paint (B-1) and 20 parts of thermo-decomposition type foaming agent (C-3).

Next, a laminate was prepared by applying the resin composition for paint to one side of substrate (A-3) by spray coating so that a paint layer might have a thickness of about 30 µm and then baking at 150°C for 5 minutes. Subsequently, the paint layer of the laminate and one side of substrate (A-4) werebondedtogetherthroughapressuresensitiveadhesivedouble coated tape and these were adhered under pressure for 1 hour by putting thereon a weight of 5 kg. Then, aging was conducted at 23°C and 50 %RH for 24 hours. Thus, an article comprises the laminate and a glass plate bonded together through the pressure sensitive adhesive double coated tape was completed. As the pressure sensitive adhesive double coated tape, "YD-4950" manufactured by SUMITOMO 3M Ltd. was used.

When the article was cooled and removed after a heat treatment in a 240°C convection oven for 5 minutes, separation had already occurred at the interface between the paint layer and the aluminum alloy plate. The pressure sensitive adhesive tape had adhered to the glass plate. However, it was able to be peeled off easily by hand. With respect to a portion where air was enclosed during the application of a pressure sensitive adhesive tape in the preparation of the article, the resin composition may remain on the aluminum alloy plate after heat peeling. However, it could be removed easily by use of acetone.

The resin composition for paint of the present invention is excellent in solvent resistance and heat resistance in baking and the like. Additionally, in a laminate obtainable from the resin composition for paint and a substrate, the paint is adhered firmly to the substrate until recycled and the paint layer can easily be peeled off from the substrate by heating the laminate. The resulting substrate can be reused. Because of such superior characteristics, it can be used for articles with which recycle of substrates is required, such as home electric appliances, e.g. refrigerators, televisions, PDP and liquid crystal displays, cars and electronic products.

## Claims

1. A resin composition for paint, which contains a thermo-decomposition type foaming agent and polyester resin for paint.

2. The resin composition according to Claim 1, wherein the content of the thermo-decomposition type foaming agent is 5 to 100 parts by weight per 100 parts of solid components of the polyester for paint.

3. The resin composition according to Claim 1 or 2, wherein the thermo-decomposition type foaming agent is an organic foaming agent.

4. The resin composition according to any of Claims 1 to 3, wherein the polyester for paint is polyester for paint for precoat steel.

5. A laminate obtainable by applying the resin composition according to Claims 1 to 4 to a substrate.

6. The laminate according to claim 5, wherein the substrate is obtained from inorganic material and/or organic material.

7. An article containing the laminate according to Claim 5 or 6.

8. A method for recovering a substrate from a laminate comprising heating the laminate according to Claim 5 or 6.
